# EUROPEAN PATENT APPLICATION

(11) **EP 1 073 298 A2**
(43) Date of publication of application: **31.01.2001**
(21) Application number: 00306320.3
(22) Date of filing: 25.07.2000
(51) Int. Cl.: H04Q 7/32

(54) **Mobile communication device and mobile communication method**

(30) Priority: 27.07.1999 JP 21265699
(71) Applicant: SONY CORPORATION, Tokyo (JP)
(72) Inventor: Komiya, Kozo, c/o Sony Corporation, Tokyo (JP)
(74) Representative: Nicholls, Michael John

(57) **Abstract**

A method and an apparatus wherein in distortion compensation of a highfrequency power amplifier, a difference on an envelope curve of the input and output of the amplifier to be distortion-compensated is detected, variations in temperatures or the like is suppressed by using a component resulting from the offset, and a component resulting from the distortion is added to the input of the amplifier, to thereby perform distortion compensation.

## Description

The present invention relates to a mobile communication device and a mobile communication method for transferring information with radio communications. More particularly, the present invention is suitable for a mobile communication device and a mobile communication method which can perform Roming.

Recently, a portable mobile communication device becomes popular, which is used in a mobile communication system which can transfer information with radio communications. For example, there is a mobile communication device used in a so-called portable telephone system, or in a Personal Handyphone System (PHS).

In the mobile communication system that uses such a mobile communication device and performs communications of information via a base station, generally, a user cannot send or receive calls outside the service area of a communication company with which the user made a contract. In such a case, by applying a service called "Roming" users can utilize a mobile communication system of other communication companies to perform communications of information, even in an area outside of the service area of the contracted communication company.

Moreover, it has been recently attempted to standardize the mobile communication systems on a global basis. Thus, if the standard is made common, users can perfonn worldwide communications by using one mobile communication device. That is to say, users can communicate by applying Roming internationally, even if users move from a country or an area where the contracted communication company exists to a country or an area where the contracted communication company does not exist.

By the way, with the above-mentioned conventional mobile communication system, if a user wants to make a specific phone call, such as an emergency call for calling the police or fire station, inquiry about time or telephone number or the like in a certain country or area, it is necessary to input a specific telephone number used in the country or area where the user is now staying to the mobile communication device to perfonn dialing.

In such a case, the user must should know the specific telephone number in that country or area or register the specific telephone number in that country or area in a telephone book of the mobile communication device beforehand. Otherwise, the user cannot make the specific call quickly. Moreover, if there is no means to know the specific telephone number in that country or area, there is a problem in that the user cannot make the specific call.

For example, of the specific telephone calls, when a user make an emergency call to the police in a country or area where the user is now staying, there may be a case where the user is frightened and gets upset due to the emergency situation, and dials the emergency telephone number for calling the police used in the country or area where the user lived before. Specifically, there is a case where a Japanese user moves to U.S.A., and make an emergency call to the police, there may be a case that he/she dials 110.

In such a case, in America, it is not connected correctly to the emergency telephone number for calling the police.

The present invention has been proposed in view of the above-mentioned situation, and therefore, it is an object of the present invention to provide a mobile communication device and a mobile communication method which makes it possible to make a phone call to the specific telephone number, even if the user does not know the specific telephone number information used in the country or area where the user now resides.

Moreover, it is another object of the present invention to provide a mobile communication device and a mobile communication method which makes it possible to be correctly connected to the specific telephone number in the country or area where the user now resides, when the user dials the specific telephone number, even if the user dials the specific telephone number used in the country or area different from the country or area where the user resides now.

The mobile communication device of the present invention is a mobile communication device which is portable and transfers information with radio communications, comprising: current area discrimination means for discriminating the current area; specific telephone number information acquisition means for acquiring specific telephone number information of the current area; and registration means for registering the specific telephone number information acquired by the specific telephone number information acquisition means in a telephone book in which at least the telephone number information is stored accessibly with respect to an index.

The mobile communication method of the present invention is a mobile communication method using a mobile communication equipment which is portable and transfers information with radio communications, comprising steps of: discriminating a current area; acquiring specific telephone number information of the current area; and registering the acquired specific telephone number information in a telephone book in which at least the telephone number information is stored accessibly with respect to an index.

Moreover, the mobile communication device of the present invention is a mobile communication device which is portable and transfers information with radio communications, comprising: call-out request discrimination means for discriminating whether or not there is a call-out request to a specific telephone number in a predetermined area; current area discrimination means for discriminating a current area; and dialing the specific telephone number in the current area corresponding to the specific telephone number in the predetermined area, if the current area discriminated by the current area discrimination means is not the predetermined area. Moreover, the mobile communication method of the present invention is a mobile communication method using a mobile communication equipment which is portable and transfers information with radio communications, comprising steps of: discriminating whether or not there is a call-out request to a specific telephone number in a predetermined area; discriminating a current area; and dialing the specific telephone number in the current area corresponding to the specific telephone number in the predetermined area, if the discriminated current area is not the predetermined area.

The invention will be more clearly understood from the following description, given by way of example only, with reference to the accompanying drawings in which:
Fig. 1 is a block circuit diagram showing one example having a construction of a portable telephone, shown as one embodiment of the present invention;
Fig. 2 is a flow chart showing a registration processing for registering specific telephone number information in a current area automatically in a telephone book, using the aforesaid portable telephone;
Fig. 3 is a diagram showing one example of specific telephone number information by area;
Fig. 4 is a flow chart showing a registration processing for registering specific telephone number information in a current area in a phone book at all times, using the aforesaid portable telephone;
Fig. 5 is a flow chart showing a conversion and cal-out processing for converting an emergency telephone number in the home input by a user into a corresponding emergency telephone number in the current area, using the aforesaid portable telephone;
Fig. 6 is a diagram showing a state that a confirmation message is displayed on a display screen of LCD; and
Fig. 7 is a flow chart showing a conversion and call-out processing for converting a specific telephone number in a predetermined area input by a user into a corresponding specific telephone number in the current area, using the aforesaid portable telephone.

Below is a description of a specific embodiment of a mobile communication device and a mobile communication method according to the present invention, with reference to drawings. Here, description is given for an example where the present invention is applied to a portable telephone which can perform Roming internationally.

A portable telephone 1 applying the present invention comprises a speaker 2, a microphone 3, a voice processing section 4, an antenna 5, a radio frequency transfer section (hereinafter abbreviated as "RF section") 6, a modulation/demodulation section 7, a CPU (Central Processing Unit) 8, an input operation section 9, a liquid crystal display section (hereinafter abbreviated as "LCD") 10, a ROM (Read Only Memory) 11, a RAM (Random Access Memory) 12, a nonvolatile memory 13, and a bus 14.

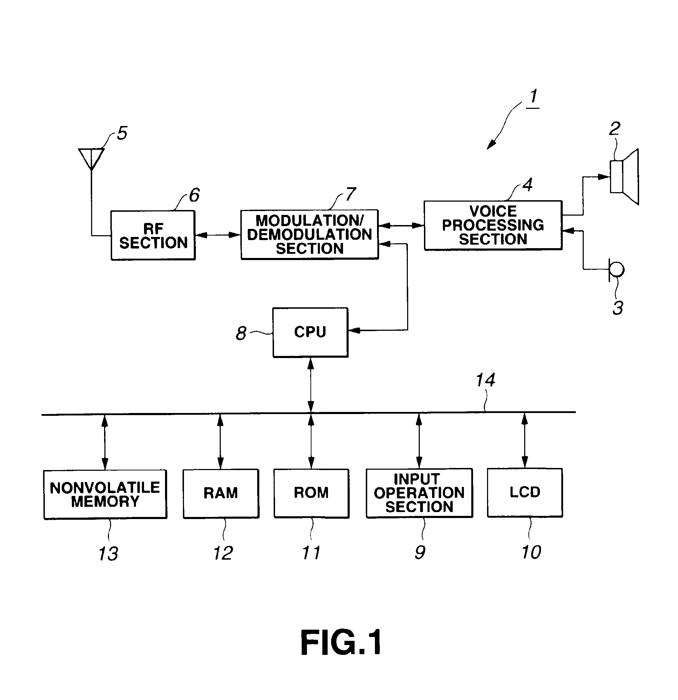

The portable telephone 1 shown in Fig. 1 is such a one in which at least telephone number infonnation is recorded accessibly with respect to an index. The index is an identification name added associated with the telephone number. The identification name can include an optional name, for example, person's name, organization name or the like. The index is registered together with the telephone number as a telephone book in the nonvolatile memory 13 described later.

The speaker 2 converts an electric voice signal output from the voice processing section 4 described later into voice and outputs the voice. A user can catch the voice output from the speaker 2 via a receiver section (not shown).

The microphone 3 converts voice spoken by a user with respect to the receiver section (not shown) into an electric voice signal. Moreover, the microphone 3 outputs the electric voice signal obtained by converting the voice to a voice processing section 4.

The voice processing section 4 has, for example, an A/D (Analog/Digital) converter, a D/A (Digital/Analog) converter, an amplifier, a codec circuit or the like, though not shown.

The voice processing section 4 subjects the signal supplied from the microphone 3 to amplification, conversion into a digital signal, bandwidth compression and addition of an error correction symbol, and outputs the obtained base band signal to the modulation/demodulation section 7 described later.

Moreover, the voice processing section 4 subjects the base band signal output from the modulation/demodulation section 7 to bandwidth compression, error correction processing, conversion into an analog signal and amplification, and outputs the obtained signal to the speaker 2.

The antenna 5 receives radio waves transmitted from an external base station, and transmits a signal output from the RF section 6 described below to the base station as radio waves.

The RF section 6 amplifies the signal received by the antenna 5 and converts the signal into a RF signal which is a signal having a predetermined frequency element. Then, after perfonning a filtering processing with respect to the converted RF signal, the signal is output to the modulation/demodulation section 7. Also, the RF section 6 mixes the modulation signal output from the modulation/demodulation section 7 with an output from a frequency synthesizer (not shown), converts it into a radio frequency, amplifies the radio frequency and output the radio frequency to the antenna 5.

The modulation/demodulation section 7 demodulates the signal of the radio frequency output from the RF section 6 to a base band signal and output the signal to the voice processing section 4. The modulation/demodulation section 7 also modulates high frequency components with the base band signal output from the voice processing section 4, and output the signal obtained by the modulation to the RF section 6.

The CPU 8 controls the modulation/demodulation section 7, the input operation section 9 via the bus 14 described below, the LCD 10, the ROM 11, the RAM 12 and the nonvolatile memory 13, and performs processing based on the information from these respective sections. Furthermore, the CPU 8 reads a program for a protocol control with the base station from the ROM 11 described later and executes the program.

The input operation section 9 has a plurality of buttons and keys (not shown). A user inputs various information, such as telephone numbers to be dialed or the like, by operating the input operation section 9. The input operation section 9 supplies information input from the user to the CPU 8.

The LCD 10 displays various information on a liquid crystal screen (not shown) under the control of the CPU 8. Specifically, the LCD 10 displays information input via the input operation section 9 under the control of CPU 8.

The ROM 11 is a memory in which various information such as programs or the like for the protocol control with the base station is written. The various information written in the ROM 11 is read out under the control of the CPU 8. Read out of the information from the ROM 11 can be done freely, but it is not possible to write new information therein. Moreover, even if the power supply of the portable telephone 1 is turned off, the information stored in the ROM 11 is not lost.

The RAM 12 is a memory for temporarily storing the information such as telephone numbers input from the input operation section 9, and is capable of read out and/or write of information at any time. To the RAM 12, read out and/or write of information is performed under the control of the CPU 8. Moreover, the information stored in the RAM 12 is lost, when the power supply of the portable telephone 1 is turned off.

The nonvolatile memory 13 is a memory for storing information, for example, the above-mentioned telephone book or the like. To the nonvolatile memory 13, read out and/or write of information can be freely performed under the control of the CPU 8. Moreover, even if the power supply of the portable telephone 1 is turned off, the information stored in the nonvolatile memory 13 is not lost.

The bus 14 serves as a communication path used for communicating various information between the input operation section 9, the LCD 10, the ROM 11, the RAM 12 and the nonvolatile memory 13, and the CPU 8 that controls these.

Incidentally, the circuit construction of the portable telephone 1 is not limited to the above described construction, and may include, for example, a vibrator or a light emission element for informing incoming calls.

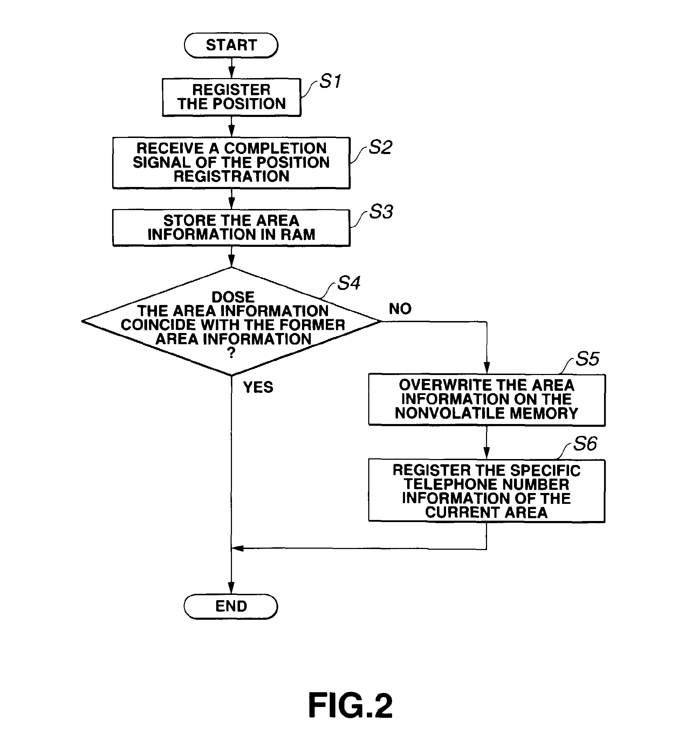

Such a portable telephone 1 automatically registers the specific telephone number information of the current area in the telephone book on the nonvolatile memory 13, by means of the processing of the routine shown in Fig. 2.

Here, the specific telephone number information is the information formed of a receiver side of the specific phone call and a specific telephone number serving as the number for making the specific call. As the specific phone calls, it is assumed to be an emergency call for calling, for example, the police or the fire station, and as required, may include phone calls for inquiring about weather forecast, time or telephone number or the like. In any countries or areas on earth, a number having a smaller number of digit is used as the specific telephone number. However, the specific telephone number is normally different for each country or area.

Specifically, the specific telephone number for calling the police is "911" in U.S.A., and "17" in France, "110" in Japan, and "110" in China.

In step S 1, in the registration processing of the specific telephone number of the routine shown in Fig. 2, the portable telephone 1 performs position registration with respect to the base station, under the control of the CPU 8.

Here, the position registration is to transmit the position registration signal to the base station and register the current position of the portable telephone 1 with the base station, under the control of CPU 8, which is performed by the portable telephone 1 for receiving a call from the base station.

Then, in step S2, the portable telephone 1 receives a position registration completion signal from the base station. The position registration completion signal includes area information. Thereby, the portable telephone 1 acquires the area information of the current area.

Here, the area information is an inherent number determined by country or area, like, for example, country number for the international calls.

Then, in step S3, the acquired area information is stored in the RAM 12 under the control of CPU 8. The area information stored in the RAM 12 is used when, for example, the country name or the area name is displayed on the screen of the LCD 10, under the control of CPU 8.

Then, in step S4, the area information stored in the RAM 12 and the former area information already stored in the nonvolatile memory 13 are compared under the control of CPU 8.

Here, the former area information means the area information acquired by executing the above routine. When the portable telephone 1 is in an initial stage, as when a user bought the portable telephone 1, it is assumed that the area information in the area where the portable telephone 1 is sold is stored in the nonvolatile memory 13 as the former area information.

If the current area information coincides with the former area information, the registration processing is completed, since the specific telephone number information of the current area has been registered in the telephone book stored in the nonvolatile memory 13.

On the other hand, if the current area information does not coincide with the former area information, the processing proceeds to step S5.

In step S5, the area information stored in the RAM 12 is overwritten on the former area information stored in the nonvolatile memory 13, under the control of CPU 8.

Then, in step S6, the specific telephone number infonnation corresponding to the area information of the current area which is overwritten on the nonvolatile memory in the step S5 is acquired by referring to the specific telephone number information by area which is stored beforehand in the ROM 11 or the nonvolatile memory 13. Then, under the control of CPU 8, the specific telephone number information of the current area is registered in the telephone book on the nonvolatile memory 13. In addition, if a specific telephone number in the area other than the current area has been registered in the telephone book, the specific telephone number is updated to the one in the current area, to thereby complete the registration processing.

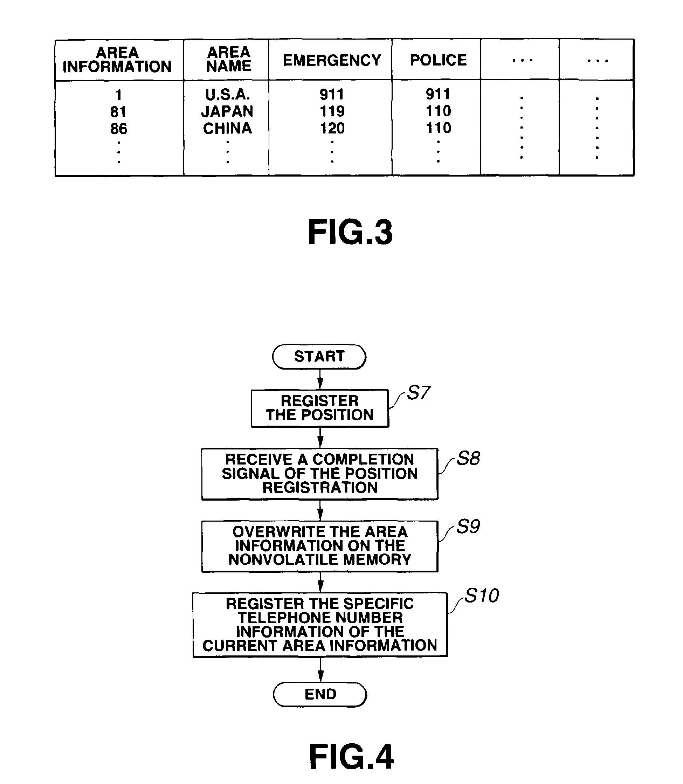

Here, the specific telephone number information by area is, as shown in Fig. 3, the information obtained by associating area information of a plurality of countries or areas with the specific telephone number information of these areas.

In step S6, it is also possible to acquire the specific telephone number information of the current area by receiving the information associating the area information in at least the current area and the specific telephone number information of the current area from the base station, without using the ROM 11 or the nonvolatile memory 13 in which the specific telephone number information by area is stored beforehand.

As described above, with the portable telephone 1 applying the present invention, the specific telephone number information of the current area where the user now resides can be automatically registered in the telephone book on the nonvolatile memory 13.

For example, if a user moves from Japan to America, while the user is in America, for example, emergency telephone number information is registered in the telephone book as the specific telephone number information in America. The emergency telephone number information is registered in the telephone book, corresponding to the index of the telephone book, for example, "police", "emergency" or the like.

Thereby, even if the user does not know the emergency telephone number in America beforehand, it is possible to read the emergency telephone number information from the telephone book and dial the number, at the time of emergency.

Moreover, in the above-described embodiment, the specific telephone number information of the current area may be registered in the telephone book at all times, by the processing shown in Fig. 4, without perfonning the processing of comparing the acquired area information of the current area and the former area information stored in the nonvolatile memory 13.

That is to say, in step S7, as in step S1, the portable telephone 1 performs position registration with respect to the base station, under the control of CPU 8.

Next, in step S8, as in step S2, the portable telephone 1 receives a position registration completion signal from the base station.

Then, in step S9, the acquired area information is overwritten on the former area information stored in the nonvolatile memory 13 under the control of CPU 8, by the processing of the former routine.

Next, in step S10, as in step S6, the specific telephone number information of the current area is acquired by referring to the specific telephone number information by area stored in the nonvolatile memory 13 of the portable telephone 1 beforehand. Then, the specific telephone number information of the current area is registered in the telephone book on the nonvolatile memory 13 under the control of CPU 8, to thereby complete the registration processing.

Thereby, even if the user does not know the specific telephone number information of the current area, it is possible to read the specific telephone number information from the telephone book and make a call.

Incidentally, with the above described embodiment, the area information of the current area of the portable telephone 1 is acquired via the base station, but it is also possible to acquire the area information of the current area of the portable telephone 1, using a generalized positioning system (hereinafter, abbreviated as "GPS" .

Here, the GPS is a system constituted of a GPS satellite, a ground-base station for controlling the GPS satellite and users having the GPS receiver. The ground-base station observes and receives signals from the GPS satellite, and analyzes the received data, to analyze the satellite orbit based on the accurate position of the ground-base station. Then, the ground-base station determines accurate orbital location and time of the GPS satellite and sends these data to the GPS satellite. The GPS satellite rearranges the data received from the ground-base station into position information required by users and transmits the information. Users can use the GPS receiver to determine their position and time.

The portable telephone 1 provided with the above-described GPS receiver receives the position information transmitted by the GPS satellite, and acquires the area information corresponding to the position infonnation.

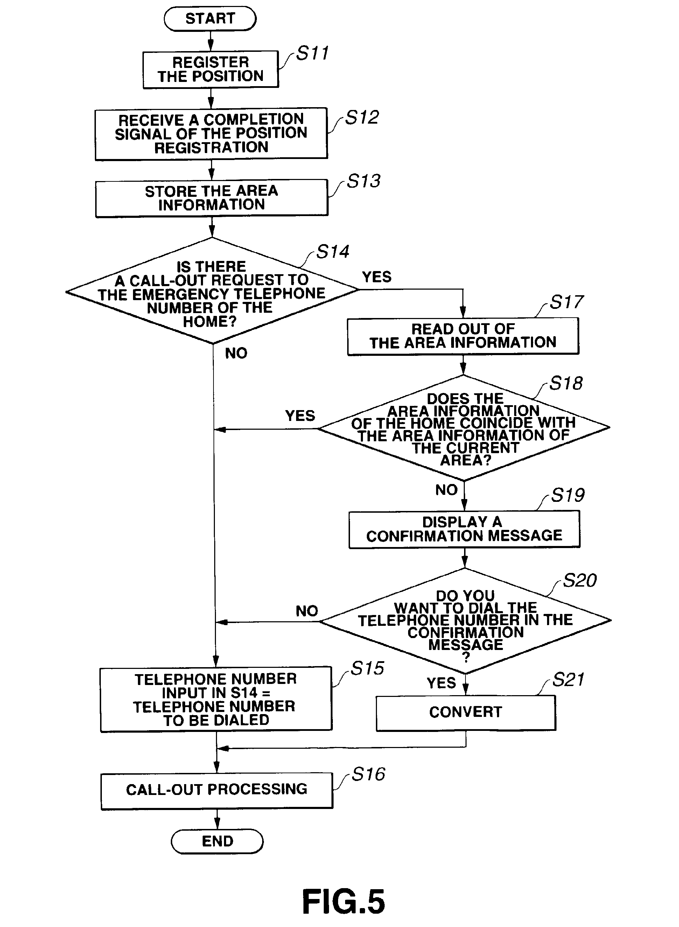

According to the above-described embodiment, the registration processing has been described, wherein the specific telephone number information of the current area is automatically registered. As another embodiment of the present invention, the portable telephone 1 can perform conversion and call-out processing, wherein when a user moves from his/her home country or area where the user normally uses the portable telephone 1 to another country or area, the emergency telephone number in the home input by the user is converted to the corresponding emergency telephone number in the other country or area to make a call. The conversion and call-out processing will now be described with reference to Fig. 5.

Here, description is given for a case where a user bought a portable telephone 1 in Japan, and therefore, the home is Japan, and the user uses the portable telephone 1 in America to make an emergency call. In the portable telephone 1 that the user bought in Japan, for example, "81" as the area information, and the police "110" and emergency "119" as the emergency telephone numbers are stored in the ROM 11 or in the nonvolatile memory 13.

At first, in step S11, the portable telephone 1 registers the position to the base station under the control of CPU 8.

In step S12, the portable telephone 1 receives the position registration completion signal from the base station. The position registration completion signal includes, for example, "1" as the area information of America. Thereby, the portable telephone 1 acquires the area information of the current area.

Then, in step S13, the acquired area information is stored in the RAM 12 under the control of CPU 8.

In step S14, then, it is discriminated whether or not the telephone number input by the user using the input operation section 9 is the emergency telephone number of the home. That is to say, it is discriminated under the control of CPU 8 whether or not call-out to the emergency telephone number of the home is requested by the user.

If it is discriminated that there is no call-out request to the emergency telephone number of the home, then the processing proceeds to step S15.

In step S15, the telephone number input by the user using the input operation section 9 in step S14 is recognized as the telephone number to be dialed, under the control of CPU 8.

Then, in step S16, dialing of the telephone number recognized as the telephone number to be dialed in step S15 is performed under the control of CPU 8, to thereby complete the conversion and call-out processing.

On the other hand, if it is discriminated that there is a call-out request to the emergency telephone number of the home, the processing proceeds to step S17.

In step S17, the area information of the current area stored in the RAM 12 is read out under the control of CPU 8.

Then, in step S18, the area information of the home and the area information of the current area are compared under the control of CPU 8.

If the area information of the home and the area information of the current area are the same, the processing proceeds to step S15.

In step S15, the telephone number input by the user using the input operation section 9 in step S14 is recognized as the telephone number to be dialed under the control of CPU 8.

Then in step S16, dialing of the telephone number recognized as the telephone number to be dialed in step S15 is performed under the control of CPU 8, to thereby complete the conversion and call-out processing.

On the other hand, if the area information of the home and the area information of the current area are different, for example, the home area information is "81" that is Japan's area information and the area information of the current area is "1" that is America's area information, the processing proceeds to step S19.

In step S19, a confirmation message showing that the emergency telephone number of the home input by the user using the input operation section 9 in step S14 is converted into the corresponding emergency telephone number in the current area is displayed on the display screen of the LCD 10, under the control of CPU 8.

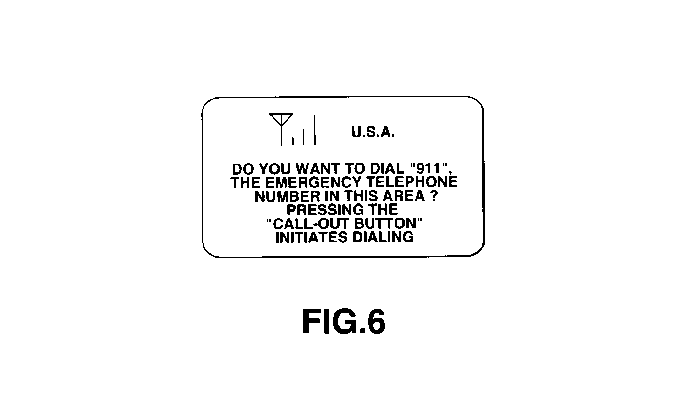

For example, in step S14, when the user requests dialing of "110" that is the emergency telephone number for calling the police in Japan, the portable telephone 1 displays the confirmation message showing that the number is converted into "911" that is the emergency telephone number for calling the police in America on the display screen of the LCD 10, for example, as shown in Fig. 6, under the control of CPU 8.

Here, when the emergency telephone number in the current area is acquired, if the specific telephone number information by area is stored in advance in the ROM 11 or in the nonvolatile memory 13, the emergency telephone number in the current area corresponding to the emergency telephone number of the home is acquired by referring to the specific telephone number information by area.

On the other hand, if the specific telephone number information by area is not stored in advance in the ROM 11 or in the nonvolatile memory 13, the emergency telephone number in the current area is acquired by receiving the information associating at least the area information of the current area with the emergency telephone number information of the current area from the base station.

Then, in step S20, the portable telephone 1 asks the user to confirm the call-out request with respect to the emergency telephone number in the current area displayed on the display screen of the LCD 10, under the control of CPU 8.

If the user does not request dialing of the emergency telephone number in the current area displayed on the display screen of the LCD 10, the processing proceeds to step S15.

In step S15, the emergency telephone number of the home input by the user using the input operation section 9 in step S14 is recognized as the telephone number to be dialed by means of the control of CPU 8.

Then, in step S16, call-out to the emergency telephone number in the predetermined area recognized as the telephone number to be dialed in step S15 is performed by means of the control of CPU 8, to thereby complete the conversion and call-out processing.

On the other hand, if the user requests dialing of the emergency telephone number in the current area displayed on the display screen of the LCD 10, for example, "911" that is the emergency telephone number for calling the police in America displayed on the display screen of the LCD 10, the processing proceeds to step S21.

In step S21, the emergency telephone number of the home is converted to the corresponding emergency telephone number in the current area, under the control of CPU 8. Then, the emergency telephone number in the current area is recognized as the telephone number to be dialed under the control of CPU 8.

For example, "110" is converted to "911" the emergency telephone number for calling the police in America, corresponding to the emergency telephone number 10 for calling the police in Japan, and the number 11 is recognized as the telephone number to be dialed.

Then, in step S16, dialing of the emergency telephone number in the current area recognized as the telephone number to be dialed in step S21 is performed under the control of CPU 8, to thereby complete the conversion and call-out processing.

As described above, according to the portable telephone 1 applying the present invention, when a user requests dialing of the emergency telephone number of the home, if the area information of the current area does not coincide with the area information of the home, the number can be converted to the emergency telephone number in the current area corresponding to the emergency telephone number of the home to make a call.

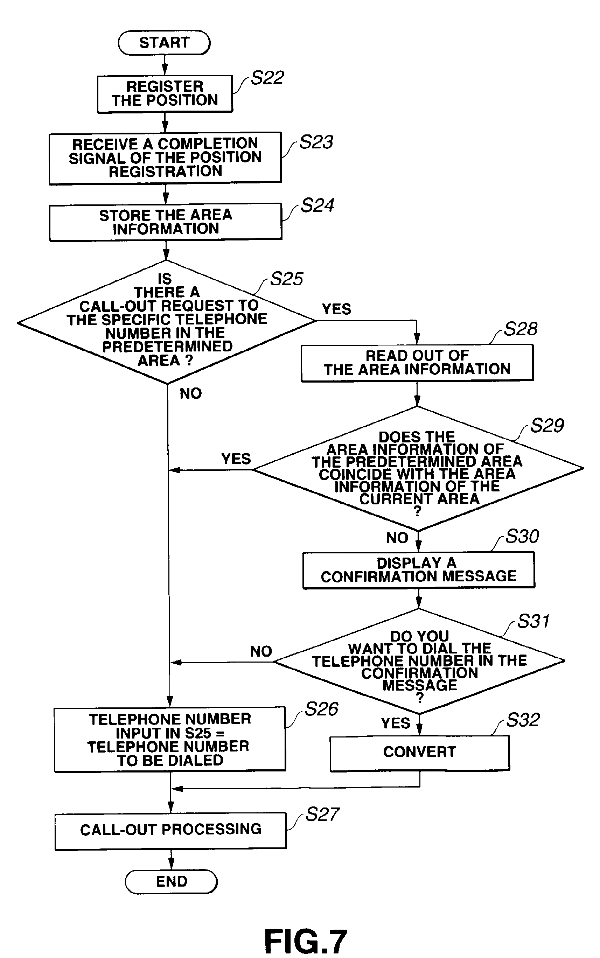

As an embodiment commonly using this conversion and call-out processing, description is given for the conversion and call-out processing wherein the specific telephone number in a predetermined area input by the user is converted to the corresponding specific telephone number in the current area to make a call, as shown in Fig. 7.

Here, the predetermined area means a country or area which the user optionally selects among the countries and areas existing on earth. In the ROM 11 or in the nonvolatile memory 13, there is stored in advance the area information and the specific telephone number information of at least one country or area that can be the predetermined area. In addition, in the ROM 11 or in the nonvolatile memory 13, there may be stored in advance the area information and the specific telephone number information of a plurality of countries or areas that can be the predetermined area.

At first, in step S22, the portable telephone 1 registers the position to the base station under the control of CPU 8.

Then in step S23, the portable telephone 1 receives a position registration completion signal from the base station. The position registration completion signal includes area information. Thereby, the portable telephone 1 acquires the area information of the current area.

Then, in step S24, the acquired area information is stored in the RAM 12 under the control of CPU 8.

In step S25, it is discriminated whether or not the telephone number input by the user using the input operation section 9 is the specific telephone number in the predetermined area. That is to say, it is discriminated under the control of CPU 8 whether or not call-out to the specific telephone number in the predetermined area is requested by the user.

If it is discriminated that there is no call-out request to the specific telephone number in the predetermined area, then the processing proceeds to step S26.

In step S26, the telephone number input by the user using the input operation section 9 in step S25 is recognized as the telephone number to be dialed, under the control of CPU 8.

Then, in step S27, dialing of the telephone number recognized as the telephone number to be dialed in step S26 is performed under the control of CPU 8, to thereby complete the conversion and call-out processing.

On the other hand, if it is discriminated that there is a call-out request to the specific telephone number in the predetermined area, the processing proceeds to step S28.

In step S28, the area information of the current area stored in the RAM 12 is read out under the control of CPU 8.

Then, in step S29, the area information of the predetermined area and the area information of the current area are compared under the control of CPU 8. If the area information of the predetermined area and the area information of the current area are the same, the processing proceeds to step S26.

In step S26, the telephone number input by the user using the input operation section 9 in step S25 is recognized as the telephone number to be dialed under the control of CPU 8.

Then in step S27, dialing of the telephone number recognized as the telephone number to be dialed in step S26 is performed under the control of CPU 8, to thereby complete the conversion and call-out processing.

On the other hand, if the area information of the predetermined area and the area information of the current area are different, the processing proceeds to step S30.

In step S30, a confirmation message showing that the specific telephone number in the predetermined area input by the user using the input operation section 9 in step S25 is converted to the corresponding specific telephone number in the current area is displayed on the display screen of the LCD 10, under the control of CPU 8, for example, as shown in Fig. 6.

Here, when the specific telephone number in the current area is acquired, if the specific telephone number information by area is stored in advance in the ROM 11 or in the nonvolatile memory 13, the specific telephone number in the current area corresponding to the specific telephone number in the predetermined area is acquired by referring to the specific telephone number information by area.

On the other hand, if the specific telephone number information by area is not stored in advance in the ROM 11 or in the nonvolatile memory 13, the specific telephone number in the current area is acquired by receiving the information associating at least the area information of the current area with the specific telephone number information of the current area from the base station.

Then, in step S31, the portable telephone 1 asks the user to confirm the call-out request with respect to the specific telephone number in the current area displayed on the display screen of the LCD 10, under the control of CPU 8.

If the user does not request dialing of the specific telephone number in the current area displayed on the display screen of the LCD 10, the processing proceeds to step S26.

In step S26, the specific telephone number in the predetermined area input by the user using the input operation section 9 is recognized as the telephone number to be dialed under the control of CPU 8.

Then, in step S27, dialing of the specific telephone number in the predetermined area recognized as the telephone number to be dialed in step S26 is performed under the control of CPU 8, to thereby complete the conversion and call-out processing.

On the other hand, if the user requests dialing of the specific telephone number in the current area displayed on the display screen of the LCD 10, the processing proceeds to step S32. In step S32, the specific telephone number in the predetermined area is converted to the corresponding specific telephone number in the current area, under the control of CPU 8. Then, the specific telephone number in the current area is recognized as the telephone number to be dialed under the control of CPU 8.

Then, in step S27, dialing of the specific telephone number in the current area recognized as the telephone number to be dialed in step S32 is performed under the control of CPU 8, to thereby complete the conversion and call-out processing.

As described above, according to the portable telephone 1 applying the present invention, when a user requests call-out to the specific telephone number in a predetermined area, if the area information of the current area does not coincide with the area information of the predetermined area, the number can be converted to the specific telephone number in the current area corresponding to the specific telephone number in the predetermined area to make a call.

Thereby, when dialing the emergency telephone number, if the user is upset and requests call-out to the emergency telephone number used in the area other than the current area, it becomes possible to correctly connect to the emergency telephone number in the current area, improving convenience at the time of emergency.

According to an embodiment other than the one described above, for example, in step S29, if the area information of the predetermined area and the area infonnation of the current area are different, it is also possible that the processing proceeds to step S32 without performing the step S30 and the step S31, and the specific telephone number input by the user to the portable telephone 1 is converted at all times to the corresponding specific telephone number in the current area.

Moreover, when the current area is discriminated, according to the above-described embodiment, discrimination is performed via the base station, but it is also possible to discriminate using the above-described GPS without the intervention of the base station.

As is obvious from the above description, with the mobile communication device according to the present invention, the specific telephone number in the current area where the user now resides is automatically registered in the telephone book in which the telephone number information is accessibly stored. Thereby, it becomes possible to dial the specific telephone number by looking up the specific telephone number to be dialed from the index, hence even if the user does not know the specific telephone number information of the current area beforehand, the user can make the specific call.

Furthermore, with the mobile communication method according to the present invention, the specific telephone number information of the current area where the user now resides is automatically registered in the telephone book in which the telephone number information is accessibly stored. Thereby, it becomes possible to dial the specific telephone number by looking up the specific telephone number to be dialed from the index, hence even if the user does not know the specific telephone number information of the current area beforehand; the user can make the specific call.

## Claims

1. A mobile communication device for transferring information with radio communications, comprising:
current area discrimination means for discriminating the current area; specific telephone number information acquisition means for acquiring specific telephone number information of the current area; and
registration means for registering said specific telephone number information acquired by said specific telephone number information acquisition means in atelephone book in which at least the telephone number information is stored accessibly with respect to an index.

2. A mobile communication device according to claim 1, wherein said specific telephone number information is emergency telephone number information.

3. A mobile communication device for transferring information with radio communications, comprising:
call-out request discrimination means for discriminating whether or not there is a call-out request to a specific telephone number of a predetermined area;
current area discrimination means for discriminating a current area; and
call-out means for dialing the specific telephone number in said current area corresponding to the specific telephone number in said predetermined area, if said current area discriminated by said current area discrimination means is not said predetermined area.

4. A mobile communication device according to claim 3, wherein said specific telephone number is an emergency telephone number.

5. A mobile communication device according to claim 3 or 4, further comprising: specific telephone number information acquisition means for acquiring specific telephone number information of said current area,
wherein said call-out means dials the specific telephone shown by the specific telephone number information of said current area acquired by said specific telephone number information acquisition means.

6. A mobile communication device according to claim 3, 4 or 5, wherein said call-out means dials the specific telephone number of said predetermined area, if said current area discriminated by said current area discrimination means is said predetermined area.

7. A mobile communication device according to any preceding claim, further comprising area information acquisition means for acquiring area information showing said current area from the base station,
wherein said current area discrimination means discriminates the current area, based on the area information acquired by said area information acquisition means.

8. A mobile communication device according to any preceding claim, further comprising:
position information reception means for receiving the position information measured by a generalized positioning system; and
area information acquisition means for acquiring the area information corresponding to the position information received by said position information receiving means;
wherein said current area discrimination means discriminates the current area, based on the area information acquired by said area information acquisition means.

9. A mobile communication device according to claim 7 or 8, further comprising memory means for storing the area information acquired by said area information acquisition means.

10. A mobile communication device according to claim 9, further comprising a comparison means for comparing the area information acquired by said area information acquisition means and the former area information stored in said memory means.

11. A mobile communication device according to any preceding, comprising: memory means for storing specific telephone number information by area in which a plurality of areas are associated with the specific telephone number information thereof;
wherein said specific telephone number information acquisition means acquires the specific telephone number information of said current area, by referring to said specific telephone number information by area.

12. A mobile communication device according to any preceding claim, further comprising: reception means for receiving the information in which the area information showing at least said current area is associated with the specific telephone number information of the current area;
wherein said specific telephone number information acquisition means acquires the specific telephone number information of the current area by referring to said information.

13. A mobile communication device according to claim 5, comprising: memory means for storing the specific telephone number information of at least said predetermined area in advance; and
reception means for receiving information in which the area information showing at least said current area is associated with the specific telephone number information of the current area;
wherein said specific telephone number information acquisition means acquires the specific telephone number information of the current area by referring to said information.

14. A mobile communication method using a mobile communication equipment for transferring information with radio communications, comprising steps of:
discriminating a current area;
acquiring specific telephone number information of the current area; and
registering said acquired specific telephone number information in a telephone book in which at least the telephone number information is stored accessibly with respect to an index.

15. A mobile communication method using a mobile communication equipment for transferring information with radio communications, comprising steps of: discriminating whether or not there is a call-out request to a specific telephone number in a predetermined area;
discriminating a current area; and
dialing the specific telephone number of said current area corresponding to the specific telephone number in said predetermined area, if the discriminated current area is not said predetermined area.

16. A mobile communication method according to claim 15, comprising steps of:
acquiring the specific telephone number information of said current area; and dialing the specific telephone number shown by the acquired specific telephone number information of said current area.

17. A mobile communication method according to claim 15 or 16, comprising a step of dialing the specific telephone number in said predetermined area, if the discriminated current area is said predetermined area.

18. A mobile communication method according to any one of claims 14 to 17, wherein said specific telephone number information is emergency telephone number information.

19. A mobile communication method according to any one of claims 14 to 18, comprising steps of:
acquiring the area information showing the current area for instance from the base station; and
discriminating said current area based on the acquired area information.

20. A mobile communication method according to claim 19, comprising a step of storing the acquired area information in memory means.

21. A mobile communication method according to claim 20, comprising a step of comparing the acquired area information and the former area information stored in the memory means.

22. A mobile communication method according to any one of claims 14 to 21, comprising steps of:
receiving position information measured by a generalized positioning system;
acquiring area information corresponding to the received position information; and
discriminating said current area based on the acquired area information.

23. A mobile communication method according to any one of claims 14 to 22, comprising steps of:
storing specific telephone number information by area in which a plurality of areas are associated with the specific telephone number information thereof; and
acquiring the specific telephone number information of said current area, by referring to said specific telephone number information by area.

24. A mobile communication method according to any one of claims 14 to 23, further comprising steps of:
receiving the information in which the area information showing at least said current area is associated with the specific telephone number information of the current area; and
acquiring the specific telephone number information of the current area by referring to said information.

25. A mobile communication method according to claim 16, comprising steps of:
storing the specific telephone number information of at least said predetermined area in memory means in advance;
receiving the information, from the base station, in which the area information showing at least said current area is associated with the specific telephone number information of the current area; and
acquiring the specific telephone number information of the current area by referring to said information.
